# EUROPÄISCHE PATENTSCHRIFT

(11) **EP 2 406 343 B1**
(45) Veröffentlichungstag und Bekanntmachung des Hinweises auf die Patenterteilung: **22.06.2016**
(21) Anmeldenummer: 10709691.9
(22) Anmeldetag: 11.03.2010
(51) Int. Cl.: C09K 11/77, C09K 11/57, C09K 11/02

(54) **PARTIKEL MIT EINER LUMINESZIERENDEN ANORGANISCHEN SCHALE, VERFAHREN ZUR BESCHICHTUNG VON PARTIKELN SOWIE DEREN VERWENDUNG**
PARTICLES HAVING A LUMINESCENT INORGANIC SHELL, METHOD FOR COATING PARTICLES AND USE THEREOF
PARTICULES AYANT UNE ENVELOPPE INORGANIQUE LUMINESCENTE, PROCÉDÉ DE REVÊTEMENT DE PARTICULES, ET LEUR UTILISATION

(30) Priorität: 11.03.2009 DE 102009012698
(43) Veröffentlichungstag der Anmeldung: 18.01.2012
(73) Patentinhaber: Fraunhofer-Gesellschaft zur Förderung der angewandten Forschung e.V., 80686 München (DE)
(72) Erfinder: DEMBSKI, Sofia, 97078 Würzburg (DE); GELLERMANN, Carsten, 97218 Gerbrunn (DE)
(74) Vertreter: Pfenning, Meinig & Partner mbB
(86) Internationale Anmeldenummer: PCT/EP2010/001543
(87) Internationale Veröffentlichungsnummer: WO 2010/102820

(56) Entgegenhaltungen:
- EP-A1- 1 146 072
- WO-A1-02/20695
- DE-A1- 10 018 405
- DE-A1- 10 111 909
- US-A- 4 925 703
- US-A1- 2007 111 324

## Beschreibung

Die Erfindung betrifft ein Verfahren zur Beschichtung von Partikeln mit einer lumineszierenden anorganischen Schale. Weiterhin betrifft die Erfindung die Verwendung von gemäß diesem Verfahren hergestellten Partikeln mit einer lumineszierenden anorganischen Schale.

Aus dem Stand der Technik sind anorganische, lumineszierende Nanopartikel bekannt. Diese besitzen aufgrund ihrer herausragenden optischen Eigenschaften ein großes Anwendungspotential für unterschiedliche Gebiete. Durch ihre einzigartigen physikalischen und chemischen Eigenschaften eröffnen diese Nanomaterialien vielfältige Möglichkeiten für die Herstellung von neuartigen Funktionseinheiten für die Optoelektronik, Energietechnologie oder für den Bereich Life Science (P. Ravilisety: Mit kleiner Partikelgröße terbiumaktivierter Yttrium-Gadolinium-Borat-Phosphor und Verfahren zur Herstellung, DE 699 08 107 T2 (2004); R. Lee, Z. Yaniv: Nanoparticle Phosphor. WO 03/028061 A1 (2003); C. S. Trumble, M. A. Johnson: Lumineszent Nanophase Binder Systems for UV and VUV Application. US 0,048,966 A1 (2001); B. Köhler, K. Bohmann, W. Hoheisel, S. Haubold, C. Meyer, T. Heidelberg: Herstellung und Verwendung von in-situmodifizierten Nanopartikeln. DE 102 59 935 A1 (2004)).

Diese Partikelsysteme zeichnen sich vor allem durch eine intensive und einstellbare Lumineszenz im sichtbaren Spektralbereich aus. Die gewünschte Emissionsfarbe kann durch Variation der Partikelgröße, der Zusammensetzung bzw. durch die Auswahl der kristallinen Phase gezielt eingestellt und gesteuert werden (F. Caruso: Colloids and Colloid Assemblies. Wiley-VCH, Weinheim (2004)).

Darüber hinaus weisen anorganische lumineszierende Nanopartikel eine hohe Photostabilität auf und bieten deshalb erhebliche Vorteile für Langzeituntersuchungen im Bereich der Bioanalytik und medizinischen Diagnostik (W. Hoheisel, C. Petry, K. Bohmann, M. Haase: Dotierte Nanoteilchen als Biolabel. DE 1001 06 643 A1 (2001); W. Chen: Nanoparticle Fluorescence based technology for biological application. J. Nanosci. Nanotechnol, 8 (2008), 1019-1051).

Zur Produktion von anorganischen lumineszierenden Nanopartikeln steht eine Vielzahl unterschiedlicher Möglichkeiten, die bereits bekannt sind, zur Verfügung. Zu nennen sind hier die Gas-, Flüssig- und Festkörperphasen-Synthesen, besonders Sol-Gel-Technologie oder organometallische Synthesen. Dabei müssen die Synthesebedingungen so aufeinander abgestimmt werden, dass einzeln vorliegende Teilchen mit einer engen Partikelgrößenverteilung erhalten werden können. Bei vielen lumineszierenden Partikelsystemen ist auch eine kristalline Materialstruktur für die optischen Eigenschaften von besonderer Bedeutung.

Eine Möglichkeit zur Herstellung von Nanopartikeln definierter Form und Größe sowie einer engen Partikelgrößenverteilung bietet der Sol-Gel-Prozess (C. Gellermann, H. Wolter: Sphärische oxidische Partikel und deren Verwendung. DE 100 18 405 B4(2004)). Mit Hilfe dieses Verfahrens können lumineszierende Partikel auf Basis von oxidischen Materialien und schichtweise aufgebaute Partikel mit einer Kern-Schale-Struktur synthetisiert werden. Dabei wird die Lumineszenz durch den Einbau von organischen Farbstoffen oder Seltenerd-Ionen erzielt (A. Geiger, H. Rupert, K. Kürzinger, P. Sluka, G. Schottner, S. Amberg-Schwab, R. Schwert, H.-P. Josel: Konjugate aus Silicatpartikeln und Biomolekülen und deren Anwendung in der medizinisch-technischen Diagnostik. DE 100 47 528 A1 (2002); A. Geiger, D. Griebel, H. Rupert, K. Kürzinger: Modifizierte oxidische Nanopartikel mit hydrophoben Einschlüssen, Verfahren zu ihrer Herstellung und Verwendung dieser Partikel. EP 1 483 203 B1 (2006)).

Für die Bildung von kristallinen Partikeln ist diese Methode aufgrund der niedrigen Synthesetemperaturen ungeeignet. Trocknung und spätere Temperaturbehandlung nasschemisch hergestellter Partikel führt in der Regel zur Aggregatbildung.

Bei den Gasphasenprozessen wird durch die Energiezufuhr der Dampf des Produktmaterials auf chemischem oder physikalischem Wege erzeugt und z.B. durch Abkühlung in den übersättigten Zustand gebracht. Dies führt zur homogenen Keimbildung gefolgt von einem weiteren Wachstum. Die gebildeten Kristallite können aggregieren oder agglomerieren. Aggregate und Agglomerate entstehen bei der Kollision sowie durch das Verschmelzen (Koaleszenz) von einzelnen Partikeln. Auf diesem Wege können bei den aus dem Stand der Technik bekannten Verfahren keine Partikel mit einer homogenen Größenverteilung erzeugt werden. Ein weiterer Nachteil dieses Verfahrens ist die notwendige hohe Reinheit der Ausgangsmaterialien, da eine Reinigung im Syntheseprozess nicht mehr stattfinden kann. Dies ist mit hohen Kosten verbunden (R. Dittmeyer, W. Keim, G. Reysa, A. Oberholz, Chemische Technik: Prozesse und Produkte. Band 2: Neue Technologie. Wiley-VCH, Weinheim (2004)).

Eine herausragende Stellung bei der Produktion von kristallinen lumineszierenden Teilchen nimmt die organometallische Synthese an. Dieses Verfahren wird erfolgreich für die Herstellung von Halbleiter-Nanopartikeln angewendet und liefert monodisperse Teilchen mit einem Durchmesser von unter 10 nm (C. B. Murray, D. J. Norris, M. G. Bawendi: Synthesis and characterization of nearly monodisperse CdE (E = sulfur, selenium, tellurium) semiconductor nanocrystallites. J. Am. Chem. Soc. 115 (1993), 8706-8715; L. H. Qu und X. G. Peng: Control of Photoluminescence Properties of CdSe Nanocrystals in Growth. J. Am. Chem. Soc. 124 (2002), 2049-2055). Bei dieser Methode werden hochsiedende Lösungsmittel, wie z.B. Phosphine, Phosphinoxide, langkettige organische Säuren und Amine, eingesetzt, die Synthesetemperaturen bis zu ca. 360 °C ermöglichen. Gleichzeitig fungieren diese Reagenzien als Oberflächenstabilisatoren zur Kontrolle des Partikelwachstums.

Die Synthese von anorganischen Leuchtstoffen, die keine Halbleiter-Eigenschaften aufweisen und deren Lumineszenz durch die Dotierung des Wirtsmaterials ermöglicht wird, muss oft über eine Feststoffreaktion bei einer mehrstündigen Wärmebehandlung bei 500 °C bis 1500 °C oder unter hohem Druck im Autoklaven erfolgen (R. Nonninger: "Nanoskalige, anorganische Leuchtpigmente und Verfahren zu deren Herstellung", DE 101 11 909 A1, (2002); A. F. Kasenga, A. C. Sigai, T. E. Peters, R. B. Hunt: "Firing and Milling Method for Producing a Manganese Activated Zinc Silicate Phosphor", US 4,925,703 (1990); S. Haubold, M. Haase, C. Riwotzki: "Dotierte Nanopartikel" WO 02/20695 A1 (2002); T. S. Amadi, M. Haase, H. Weller: "Lowtemperature synthesis of pure and Mn-doped willemite phosphor (Zn2Si04:Mn) in aqueous medium", Mater. Res. Bull. 35 (2000), 1869-1879).

Hohe Temperaturen und lange Ausheizzeiten werden zur Ausbildung des Wirtsgitters für eine ausreichend homogene Verteilung der Lumineszenzatome durch Diffusion im Wirtsgitter benötigt.

Weiterhin spielt im Fall von anorganischen lumineszierenden Materialien das anorganische Kristallgitter hier eine wichtige Rolle. Zum einen ist es ein Struktur-bestimmendes Netzwerk, in dem Dotierungsionen fixiert sind, und zum anderen ist es auch gleichzeitig Sensibilisator für deren Lumineszenz. Zum Erzielen von hohen Quantenausbeuten müssen sich die Dotierungsionen in einem möglichst homogenen und passenden Kristallfeld befinden. Dies erfordert eine perfekte hochwertige Kristallinität des Matrixgitters. Außerdem müssen die Donoratomen homogen verteilt sein. Konzentrationsgradienten führen zur Lumineszenzlöschung. Nur unter diesen Voraussetzungen kann hohe Lumineszenzintensität gewährleistet werden.

In den letzten Jahren wurden einige Strategien entwickelt, um kristalline lumineszierende Nanopartikel besserer Qualität zu erhalten. Zum Beispiel werden Partikel mit Kern-Schale-Struktur hergestellt (T. Kazuya, G. Kazuyoshi, F. Naoko, O. Hisatake, H. Hideki: Core/Shell Type Particle Phosphor. US 2007/0212541 A1 (2007); C. Meyer, M. Haase, W. Hoheisel, K. Bohmann: Kern-Mantel Nanoteilchen für (F)RET-Testverfahren. DE 603 10 032 T2, (2006); R. Rupaner, R. J. Leyrer, P. Schumacher: Kern/Schale-Partikel, Ihre Herstellung und Verwendung. EP 0 955 323 B1 (2004)). Dabei kann der Partikelkern oder die Schale Lumineszenzeigenschaften aufweisen.

Als Grundlage für die Herstellung von Kern-Schale-Nanopartikeln mit einer anorganischen lumineszierenden Schale dient oft der Sol-Gel-Prozess nach M. P. Pechini (M. P. Pechini: Method of Preparing Lead and Alkaline Earth Titanates and Niobates and Coating Methods Using the Same to Form a Capacitor. US 3,330,697, (1967); T. Mayerhöfer, K. F. Renk: Beschichtungsverfahren. DE 195 46 483 A1, (1997)). Auf diese Weise können Teilchen mit einem Durchmesser im Nano- und Mikrometerbereich mit einer kristallinen Schale versehen werden. Im ersten Schritt werden sphärische SiO₂-Kerne nasschemisch mit Ausgangsverbindungen für die Herstellung von dotiertem Lumineszenzmaterial beschichtet. Im zweiten Schritt werden beschichtete Nanopartikel einer Temperaturbehandlung unterzogen. Das Erhitzen führt zur Bildung einer kristallinen Phase. Bei diesem Herstellungsprozess wird die Erfolgsquote für das Erhalten von aggregat- bzw. agglomeratfreien Teilchen mit der sinkenden Partikelgröße aufgrund des Verschmelzens von einzelnen Teilchen immer kleiner. Kleine Partikel können ohne spezielle Vorbehandlung nicht aggregatfrei ausgeheizt werden.

Bei den aus dem Stand der Technik bekannten Verfahren werden oft Partikel erzeugt, die relativ groß sind und eine breite Partikelgrößenverteilung aufweisen, was weitere Reinigungsstufen, wie z.B. Zentrifugieren, erfordert. Die Synthese von kleinen Partikeln mit einer engen Größenverteilung ist in der Regel mit dem Einsatz von phosphororganischen Verbindungen verbunden, die als Metall-Komplexierungsmittel und gleichzeitig als organisches Reaktionsmedium fungieren. Anwendungen von diesen Substanzen erhöhen die Produktionskosten, da solche Substanzen teuer sind. Ein weiterer Nachteil ist die nur begrenzte Redispergierbarkeit und Stabilität von auf diese Weise hergestellten Partikeln in anderen Lösungsmitteln, speziell in wässrigen Medien. Die Überführung von Partikeln in andere Lösungsmittel ist mit dem Austauschen der Oberflächenstabilisatoren verbunden, was oft zur Verschlechterung der Partikeleigenschaften führen kann.

Die US 2007/0111324 A1 beschreibt einen legierten Quantendot enthaltend eine Legierung aus mindestens zwei Halbleitern sowie Verfahren zu deren Herstellung und Verwendung. Die Konzentration des ersten Halbleiters nimmt dabei sukzessive vom Kern zur Oberfläche des Quantendots hin zu, wohingegen die Konzentration des zweiten Halbleiters sukzessive von der Oberfläche zum Kern des Quantendots hin abnimmt.

In der EP 1 146 072 A1 sowie in der DE 100 18 405 A1 werden sphärische oxidische Partikel sowie Verfahren zu deren Herstellung und deren Verwendung beschrieben, wobei die Partikel eine Partikelgröße von 5 bis 10000 nm aufweisen und 0,1 bis 99,9 Gew.-% einer ersten oxidischen Verbindung, ausgewählt aus Titan, Zirkon, Aluminium, Yttrium und/oder Silicium und mindestens ein weiteres Oxid der Lanthanoide enthalten.

Die DE 101 11 909 A1 beschreibt nanoskalige, anorganische Leuchtpigmente sowie Verfahren zu deren Herstellung. Die erhaltenen langzeitstabilen Leuchtpigmente auf Basis von Zinksilikat und Yttriumsilikat mit einer Primäteilchengröße unter 100 nm eignen sich dabei zur Entwicklung von hochauflösenden Bildschirmen sowie als unsichtbare Codierungen. Ausgehend hiervon ist es Aufgabe der vorliegenden Erfindung, die Nachteile des Standes der Technik zu beseitigen und ein Verfahren zur Beschichtung von Partikeln bereitzustellen, wodurch aggregatarme Partikel mit einer lumineszierenden anorganischen Schale kostengünstig und mit geringer Größenverteilung hergestellt werden können.

Diese Aufgabe wird durch das Verfahren mit den Merkmalen des Anspruchs 1 gelöst. Anspruch 14 ist auf die Verwendung der gemäß diesem Verfahren hergestellten Partikel ausgerichtet. Weitere vorteilhafte Ausführungsformen sind in den abhängigen Ansprüchen enthalten.

Erfindungsgemäß wird ein verfahren zur Beschichtung von Partikeln mit einer mittleren Partikelgröße von 20 nm bis 20 µm mit einer lumineszierenden anorganischen Schale bereitgestellt. Dieses Verfahren erfolgt gemäß den folgenden Schritten:
a) Synthese der Kerne,
b) Beschichtung der Kerne mit einem anorganischen dotierten Material,
c) Temperaturbehandlung der beschichteten Kerne.

Das erfindungsgemäße Verfahren ist weiterhin dadurch gekennzeichnet, dass als Schritt c) eine stufenweise Temperaturbehandlung der beschichteten Kerne durchgeführt wird, mit der Maßgabe, dass in mindestens einem ersten Schritt die beschichteten Kerne bei unter 0 °C vorbehandelt und dann in mindestens einem zweiten Schritt einer Wärmebehandlung zur Bildung einer kristallinen Schale unterzogen werden.

Die Darstellung von monodispersen Kernen kann über bekannte nasschemische Verfahren, z.B. auf Basis des Stöber-Prozesses oder des Emulsions- bzw. Aerosol-Verfahrens erfolgen. Als Grundlage für die Beschichtung von amorphen Partikelkernen mit einer kristallinen lumineszierenden Schale kann der modifizierte Sol-Gel-Prozess nach M. P. Pechini dienen. Die Partikelkerne können hierbei auf nasschemischem Wege mit
einem lumineszierenden Material der Wahl beschichtet werden und der Dotierungsgrad kann je nach Bedarf variiert werden.

Der Kern und die Schale können porös oder auch dicht sein, je nach der Partikelzusammensetzung, des Partikelmaterials und der weiteren Anwendung.

Als Kerne können beliebig hergestellte (z.B. auf Basis des Stöber-Prozesses oder des Emulsions- bzw. Aerosol-Verfahrens) Partikel eingesetzt werden, deren Form, Porosität, Größe und Größenverteilung je nach weiteren Anwendungen gezielt ausgewählt werden können. Unter Anderem können auch kommerziell erhältliche SiO₂- sowie magnetische Partikel bzw. Kerne eingesetzt werden.

Anorganische lumineszierende oder elektromagetisch aktive Materialien sind kristalline Komponenten, die auf sie einwirkende Energie absorbieren und im Anschluss emittieren. Die Emission von Licht wird Lumineszenz genannt. Ein Material, das länger als 10⁻⁸ s nach Entfernung der Anregungsquelle weiterhin Licht emittiert, wird ein phosphoreszierendes Material genannt. Phosphoreszierende Substanzen sind auch als Leuchtstoffe bzw. als Luminophore bekannt. Im Gegensatz zu phosphoreszierenden Substanzen werden Substanzen, deren Lichtemission unmittelbar oder innerhalb von 10⁻⁸ s nach dem Entfernen der Anregungsquelle endet, fluoreszierende Substanzen genannt. Die Halbwertszeit des Nachleuchtens variiert in Abhängigkeit von der Substanz und reicht typischerweise von 10⁻⁶ Sekunden bis zu Tagen.
Leuchtstoffe können prinzipiell als stokes (herunterkonvertierende, down-converting) oder anti-stokes (hoch-konvertierende, up-converting) Leuchtstoffe bezeichnet werden. Leuchtstoffe, die die Energie in Form eines Photons bestimmter Energie absorbieren und Licht einer niedrigeren Energie abstrahlen heißen Down-Konverter. Im Gegensatz dazu werden Leuchtstoffe, die Energie in Form von zwei oder mehreren Photonen absorbieren und folglich höhere Frequenzen emittieren Up-Konverter genannt. Leuchtstoffe können weiterhin abhängig von der Herkunft der Anregungsenergie unterschieden bzw. eingeordnet werden. Beispielsweise werden Leuchtmittel, die durch niedrig-energetische Photonen angeregt werden, photolumineszent und Leuchtmittel, die mittels Kathodenstrahlung angeregt werden, kathodolumineszent genannt. Andere elektromagnetisch aktive Partikel umfassen auch Pigmente und Radiofrequenz-Absorber.

Als Beschichtungsmaterialien können unterschiedliche anorganische Verbindungen eingesetzt werden, wie z.B. oxidische Verbindungen, Phosphate, Sulfide, Silicate, Aluminate sowie deren Mischungen.

Bevorzugt wird beim ersten Schritt als Vorbehandlung ein Schockfrieren der beschichteten Kerne durchgeführt. Die so vorbehandelten Kerne können im Anschluss gefriergetrocknet werden. Dies führt zu einer lockeren Lagerung der Partikel nebeneinander und verhindert somit das Verschmelzen der Partikel während gegebenenfalls nachfolgender Prozesse.

In einer Verfahrensvariante wird die Wärmebehandlung zur Bildung der kristallinen Schale stufenweise durchgeführt. Somit kann die kristalline Schale ohne bzw. mit nur wenigen Störstellen gebildet werden.

Als Matrixsystem für das Schalenmaterial (Wirtsmaterial) können zum Beispiel die im Folgenden genannten eingesetzt werden:
CaS : Ln³⁺ (mit Ln³⁺ : Ce³⁺, Sm³⁺, Eu²⁺),
Silikate Zn₂SiO₄ dotiert mit Mn²⁺ oder Ln1, Ln2 (mit Ln(1,2) : Ce³⁺, Eu³⁺, Tb³⁺, Sm³⁺, als Alternative
Y₂SiO₅ : Eu³⁺, Ce³⁺ Tb³⁺
Aluminate (Sr,Ca)Al₂O₄:Ln (mit Ln: Ce³⁺, Pr³⁺, Nd³⁺, Eu²⁺/Eu³⁺, Tb³⁺, Dy³⁺)
ZnS :Cu,Pb und unterschiedliche Calciumphosphate.

Spezifische Beispiele lumineszenter Schalenmaterialien sind z.B.: LiJ:Eu; NaJ:Tl; CsJ:Tl; CsJ:Na; LiF:Mg; LiF:Mg,Ti; LiF:Mg,Na; KMgF₃:Mn; BaFCl:Eu; BaFCl:Sm; BaFBr:Eu; BaFCl_{0,5}Br_{0,5}:Sm; BaY₂F₈:A (A = Pr, Tm, Er, Ce); BaSi₂O₅:Pb; BaMg₂Al₁₆O₂₇:Eu; BaMgAl₁₄O₂₃:Eu; BaMgAl₁₀O₁₇:Eu; BaMgAl₂O₃:Eu; Ba₂P₂O₇:Ti; (Ba, Zn,Mg)₃Si2O₇:Pb; Ce(Mg,Ba)Al₁₁O₁₉; Ce_{0,65}Tb_{0,35}MgAl₁₁O₁₉:Ce, Tb; MgAl₁₁O₁₉:Ce,Tb; MgF₂:Mn; MgS:Eu; MgS:Ce; MgS:Sm; MgS:(Sm,Ce); (Mg,Ca)S:Eu; MgSiO₃:Mn; 3 , 5MgO x 0, 5MgF₂ x GeO₂:Mn; MgWO₄:Sm; MgWO₄:Pb; 6MgO × As₂O₅:Mn; (Zn,Mg)F₂:Mn; (Zn₄Be)SO₄:Mn; Zn₂SiO₄:Mn; Zn₂SiO₄:Mn,As; Zn₃(PO₄)₂:Mn; CdBO₄:Mn; CaF₂:Mn; CaF₂:Dy; CaS:A (A = Lanthanid, Bi); (Ca,Sr)S:Bi; CaWO₄:Pb; CaWO₄:Sm; CaSO₄:A (A = Mn, Lanthanid); 3Ca₃(P0₄)₂×Ca(F,Cl)₂:Sb,Mₙ; CaSiO₃:Mn,Pb; Ca₂Al₂Si₂O₇:Ce; (Ca,Mg)SiO₃:Ce; (Ca,Mg)SiO₃:Ti; 2SrO x 6(B₂0₃) x SrF₂:Eu; 3Sr₃(PO₄)₂ × CaCl₂:Eu; A₃(P0₄)₂ × ACl₂:Eu (A = Sr, Ca, Ba) ; (Sr,Mg)₂P₂O₇:Eu; (Sr,Mg)₃(P0₄)₂Sn; SrS:Ce; SrS:Sm,Ce; SrS:Sm; SrS:Eu; SrS:Eu,Sm; SrS:Cu,Ag; Sr₂P₂O₇:Sn; Sr₂P₂O₇:Eu; Sr₄Al₁₄O₂₅:Eu; SrGa₂S₄:A (A = Lanthanid, Pb); SrGa₂S₄:Pb; Sr₃Gd₂Si₆O₁₈:Pb,Mn; YF₃:Yb,Er; YF₃:Ln (Ln = Lanthanid); YLiF₄:Ln (Ln = Lanthanid); Y₃Al₅O₁₂:Ln (Ln = Lanthanid); YAI₃(B0₄)₃Nd,Yb; (Y,Ga)B0₃:Eu; (Y,Gd)BO₃:Eu; Y₂Al₃Ga₂O₁₂:Tb; Y₂SiO₅:Ln (Ln = Lanthanid); Y₂O₂S:Ln (Ln = Lanthanid); YVO₄A (A = Lanthanid, In); Y(P,V)O₄:Eu; YTaO₄:Nb; YAIO₃:A (A = Pr, Tm, Er, Ce); YOCl:Yb,Er; LnPO₄:Ce,Tb (Ln = Lanthanid oder Mischung von Lanthaniden); LuVO₄:Eu; GdVO₄:Eu; Gd₂O₂S:Tb; GdMgB₅O₁₀: Ce, Tb; LaOBr : Tb; La₂O₂S:Tb; LaF₃:Nd,Ce; BaYb₂F₈:Eu; NaYF₄:Yb,Er; NaGdF₄:Yb,Er; Na-LaF₄:Yb,Er; LaF₃:Yb,Er,Tm; BaYF₅:Yb,Er; GaN:A (A = Pr, Eu, Er, Tm); Bi₄Ge₃O₁₂; LiNbO₃:Nd,Yb; LiNbO₃:Er; Li-CaAlF₆:Ce; LiSrAlF₆:Ce; LiLuF₄:A (A = Pr, Tm, Er, Ce) ; Li₂B₄O₇:Mn; Y₂O₂Eu; Y₂SiO₅:Eu; CaSiO₃:Ln, worin Ln = 1, 2 oder mehr Lanthaniden.

Bei Klassifizierung gemäß dem Wirts-Gittertyp sind die folgenden bevorzugten Ausgestaltungen ebenfalls mit umfasst:
1. Halogenide: z.B. XY₂ (X = Mg, Ca, Sr, Ba; Y = F, Cl, J); CaF₂:Eu(II); BaF₂:Eu; BaMgF₄:Eu; Li-BaF₃Eu; SrF₂Eu; SrBaF₂Eu; CaBr₂Eu-SiO₂; CaCJ₂:Eu; CaCJ₂:Eu-SiO₂; CaCJ₂:Eu,Mn-SiO₂; CaJ₂:Eu; CaJ₂:Eu,Mn; KMgF₃:Eu; SrF₂:Eu(II); BaF₂:Eu(II); YF₃; NaYF₄; MgF₂:Mn; MgF₂:Ln (Ln = Lanthanid(en)).
2. Erdalkalisulfate: z.B. XSO₄ (X = Mg, Ca, Sr, Ba); SrSO₄:Eu; SrSO₄:Eu,Mn; BaSO₄:Eu; Ba-SO₄:Eu,Mn; CaSO₄; CaSO₄:Eu; CaSO₄:Eu,Mn; sowie gemischte Erdalkalisulfate, auch in Kombination mit Magnesium, z.B. Ca,MgSO₄:Eu,Mn.
3. Phosphate und Halophosphate: z.B. CaPO₄:Ce,Mn; Ca₅(PO₄)₃Cl:Ce,Mn; Ca₅(PO₄)₃F:Ce,Mn; SrPO₄:Ce,Mn; Sr₅(PO₄)₃Cl:Ce,Mn; Sr₅(PO₄)₃F:Ce,Mn; die letzteren auch codotiert mit Eu(II) oder codotiert mit Eu,Mn; α-Ca₃(PO₄)₂:Eu; β-Ca₃(PO₄)₂:Eu,Mn; Ca₅(PO₄)₃Cl:Eu; Sr₅(PO₄)₃Cl:Eu; Ba₁₀(PO₄)₆Cl:Eu; Ba₁₀(PO₄)₆Cl: Eu, Mn; Ca₂Ba₃ (PO₄)₃Cl:Eu; Ca₅(PO₄)₃F:Eu²⁺X³⁺; Sr₅(PO₄)₃F:Eu²⁺X³⁺ (X = Nd, Er, Ho, Tb); Ba₅(PO₄)₃Cl:Eu; β-Ca₃(PO₄)₂:Eu; CaB₂P₂O₉:Eu; CaB₂P₂O₉:Eu; Ca₂P₂O₇:Eu; Ca₂P₂O₇:Eu,Mn; Sr₁₀(PO₄)₆Cl₂:Eu; (Sr,Ca,Ba,Mg)₁₀(PO₄)₆Cl₂:Eu; La-PO₄:Ce; CePO₄; LaPO₄:Eu; LaPO₄:Ce; LaPO₄:Ce,Tb; CePO₄:Tb.
4. Borate: z.B. LaBO₃; LaBO₃:Ce; ScBO₃:Ce; YAIBO₃:Ce; YBO₃:Ce; Ca₂B₅O₉Cl:Eu; xEuO x yNa₂O x zB₂O₃.
5. Vanadate: z.B. YVO₄; YVO₄:Eu; YVO₄:Dy; YVO₄:Sm; YVO₄:Bi; YVO₄:Bi,Eu; YVO₄:Bi,Dy; YVO₄:Bi,Sm; Y-VO₄:Tm; YVO₄Bi,Tm; GdVO₄; GdVO₄:Eu; GdVO₄:Dy; GdVO₄:Sm; GdVO₄:Bi; GdVO₄:Bi,Eu; GdVO₄:Bi,Dy; GdVO₄:Bi,Sm; YVO₄:Eu; YVO₄:Sm; YVO₄:Dy.
6. Aluminate: z.B. MgAl₂O₄:Eu; CaAl₂O₄:Eu; SrAl₂O₄Eu; BaAl₂O₄:Eu; LaMgAl₁₁O₁₉:Eu; BaMgAl₁₀O₁₇:Eu; BaMgAl₁₀O₁₇:Eu,Mn; CaAl₁₂O₁₉:Eu; SrAl₁₂O₁₉:Eu; SrMgAl₁₀O₁₇:Eu; Ba(Al₂O₃)₆:EU; (Ba,Sr)MgAl₁₀O₁₇:Eu,Mn; CaAl₂O₄: Eu, Nd; SrAl₂O₄Eu, Dy; Sr₄Al₁₄O₂₅:Eu,Dy.
7. Silikate: z.B. BaSrMgSi₂O₇:Eu; Ba₂MgSiO₇:Eu; BaMg₂Si₂O₇:Eu; CaMgSi₂O₆:Eu; SrBaSiO₄:Eu; Sr₂Si₃O₈ x SrCl₂:Eu; Ba₅SiO₄Br₆:Eu; Ba₅SiO₄Cl₆:Eu; Ca₂MgSi₂O₇:Eu; CaAl₂Si₂O₈:Eu; Ca_{1,5}Sr_{0,5}MgSi₂O₇:Eu; (Ca,Sr)₂MgSiO₇:Eu; Sr₂LiSiO₄F:Eu; Sr₃Al₂O₆:Eu, Sr₃Al₂O₆:XY (X=Eu, Y=Dy), Sr₅Al₂O₈:Eu, Y₃Al₅O₁₂:Ce, Gd₃Al₅O₁₂:Ce, Lu₃Al₅O₁₂:Ce und (GdLu)₃Al₅O₁₂:Ce, Tb₃Al₅O₁₂:Ce, Tb₃Al₅O₁₂:XY (X=Ce, Y=Eu, Mn).
8. Wolframate und Molybdate: z.B. X₃WO₆ (X = Mg, Ca, Sr, Ba) ; X₂WO₄ (X = Li, Na, K, Rb, Cs); XMoO₄ (X = Mg, Ca, Sr, Ba) und MgWO₄, CaWO₄, CdWO₄, ZnWO₄; sowie Polymolybdate oder Poly-wolframate oder die Salze der entsprechenden Hetero- oder Isopolysäuren.
9. Germanate: z.B. Zn₂GeO4.
10. Außerdem die folgenden Klassen: ALnO₂:Yb,Er (A = Li, Na; Ln = Gd, Y, Lu); LnAO₄:Yb,Er (Ln = La, Y; A = P, V, As, Nb) ; Ca₃Al₂Ge₃O₁₂:Er; Gd₂O₂S:Yb,Er; La₂S:Yb,Er, Ba₂ZnS₃:Ce.

Bevorzugt erfolgt in mindestens einer ersten Stufe eine Wärmebehandlung bei 50°C bis 300 °C, vorzugsweise bei 100 °C bis 120 °C. Diese kann zur schonenden Entfernung flüchtiger Bestandteile durchgeführt werden.

In einer alternativen Variante des Verfahrens erfolgt die Wärmebehandlung unter mechanischer Umwälzung. Somit ist eine gleichmäßigere Wärmeverteilung ermöglicht.

In mindestens einer zweiten Stufe wird eine Wärmebehandlung zur Bildung der kristallinen Schale bei einer Temperatur von 400 °C bis 1400 °C durchgeführt.

Bevorzugt wird mit einer Aufheizrate von 50 °C bis 500 °C, vorzugsweise 300 °C bis 400 °C, pro Stunde gearbeitet. Durch den Einsatz hoher Aufheizraten kann so ein langsames Zusammenwachsen der Partikel vermieden werden. Weiterhin kann die organische Phase bei hohen Temperaturen vollständig verbrannt werden. Somit führt diese Behandlung zur Bildung einer kristallinen Phase in der Partikelschale und gleichzeitig zum Fixieren der Schale an den Partikelkern. Es können hierbei verschiedene Temperaturen angefahren werden, die für die Bildung der entsprechenden kristallinen Phasen erforderlich sind. Die Partikel werden nur kurz, beispielsweise 15 Minuten, der eigentlichen Temperatur ausgesetzt, die für die Bildung der kristallinen Phasen benötigt wird. Anschließend wird schnell auf Raumtemperatur abgekühlt.

Die Schichtdicke kann durch die Menge von Ausgangsverbindungen bzw. durch das Wiederholen der bereits genannten Schritte gezielt eingestellt werden. Die auf diese Weise hergestellten Partikel können je nach Bedarf leicht in unterschiedlichen Lösungsmedien redispergiert und weiter verwendet werden, wobei die Partikeloberflächen aktiv bleiben.

In einer Verfahrensvariante wird die für die Bildung der kristallinen Schale erforderliche Temperatur für 5 Minuten bis 1,5 Stunden, vorzugsweise für 10 bis 30 Minuten, gehalten. Diese Zeitintervalle werden in Abhängigkeit von den eingesetzten Materialien variiert und somit optimale Beschichtungsergebnisse erzielt.

In einem bevorzugten Verfahren wird die Schichtdicke der kristallinen Schale auf einen Wert von 1 nm bis 100 nm eingestellt. Diese Partikel lumineszieren vorzugsweise im sichtbaren Spektralbereich. Die Lumineszenz ist in diesem Spektralbereich besonders gut detektierbar.

Weiterhin kann eine weitere Schale, die als Sperrschicht fungiert, aufgebracht werden. Als Sperrschicht kann zum Beispiel eine dünne SiO₂- oder Polymerschale fungieren. Zum einen wird damit die Diffusion des Schalen- beziehungsweise Dotierungsmaterials aus dem Partikel verhindert und somit die Biokompatibilität der Partikelsysteme erhöht. Zum anderen können variable Liganden oder Spacer (Abstandshalter) daran leichter angekoppelt werden. Im Falle einer Silica-Schale kann die Ankopplung z. B. mittels Silanisierung erfolgen.

Alternativ hierzu kann eine Oberflächenfunktionalisierung durchgeführt werden. Diese erfolgt bevorzugt durch die Kopplung von Liganden an die Oberfläche. Somit kann eine kovalente Oberflächen-Anbindung von Polymeren und (Bio)molekülen, z.B. Antikörpern, unter Berücksichtigung der Oberflächen-Affinität ermöglicht werden.

Die Oberflächen-Modifizierung von Nanopartikeln kann grundsätzlich auf zwei Wegen erfolgen. Eine Möglichkeit ist die Kopplung von Liganden direkt an das Partikelmaterial. Dazu sind gegebenenfalls bifunktionelle Moleküle geeignet, die an der einen Seite eine Affinität zur Partikeloberfläche, an der anderen Seite die gewünschte Funktionalität aufweisen. Für das Schalenmaterial, beispielsweise auf Silikatbasis, können z.B. bifunktionelle Organosilane, die die notwendigen reaktiven Gruppen aufweisen, zur Oberflächen-Derivatisierung eingesetzt werden. Organische Liganden werden durch die Reaktion zwischen Alkoxysilyl-Einheiten des Silans und Hydroxyl-Gruppen auf der Partikeloberfläche kovalent gebunden (Silanisierung). Bei anderen Partikelsystemen können geeignete Oberflächen-Liganden durch Rückgriff auf die hohe Affinität der Oberflächenionen zu unterschiedlichen funktionellen Gruppen gefunden werden (z.B. Ca²⁺-Ionen weisen eine hohe Affinität zu Phosphaten und Carboxylaten auf oder ZnS oder CaS können mit Liganden, die eine Mercaptogruppe besitzen, funktionalisiert werden).

Eine andere Möglichkeit zur Modifizierung von Partikeln, im Hinblick auf Einstellung einer besseren Biokompatibilität, kann deren Beschichtung mit einer dünnen SiO₂-Schale unter Berücksichtigung der Lumineszenzeigenschaften sein. Zum einen wird damit die Diffusion des Dotierungsmaterials aus dem Partikel verhindert und zum anderen können biospezifische Liganden an Silica leichter angekoppelt werden. Der Aufbau einer dünnen, stabilisierenden Siliciumdioxid-Schale erfolgt nach bekannten Methoden. Eine dünne Schutzschicht kann durch die Quervernetzung der an der Partikeloberfläche angekoppelten Organosilane gebildet werden. Die schrittweise Zugabe des Silans führt zum kontrollierten Aufbau der Schale, wodurch ein langsames Schalenwachstum ohne Aggregatbildung ermöglich wird. Weiterhin kann auf diese Weise auch die Dicke der Sperrschicht gezielt eingestellt werden.

Bei der Beschichtung von Nanopartikeln mit einer Siliciumdioxid-Schale besteht oftmals folgende Herausforderung, dass Kern-Schale-Partikel aufgrund der Materialeigenschaften der Schale oder aufgrund synthesebedingter Oberflächenmodifizierung in dem Reaktionsmedium, das für das Siliciumdioxid-Wachstum geeignet ist, instabil sind. Um die Partikel in dem erforderlichen Lösungsmittel unter Erhalt ihrer Eigenschaften zu stabilisieren, können diese zunächst reversibel mit einem amphiphilen Polymer, wie z.B. Polyvinylpyrrolidon, beschichtet werden. Anschließend kann in Anlehnung an den Stöber-Prozess eine Siliciumdioxid-Schicht aufgebaut werden. Dabei nimmt das Polymer an der Reaktion selbst nicht teil und trägt nur zur Stabilisierung der Partikel im Reaktionsmedium bei. Durch kontrolliertes Wachstum der Siliciumdioxid-Schicht lässt sich die gewünschte Schalendicke letztendlich gezielt einstellen.

Für die Oberflächen-Funktionalisierung eingesetzte Liganden sind ausgewählt aus Carboxy-, Carbonat-, Amin-, Maleimid-, Imin-, Imid-, Amid-, Aldehyd-, Thiol-, Isocyanat, Isothiocyanat-, Acylazid-Hydroxyl-, N-hydroxysuccinimidester, Phosphat-, Phosphonsäure-, Sulfonsäure-, Sulfonsäurechlorid, Epoxy, CC-Doppelbindungen-haltige Einheiten, wie z.B. Methacryl- oder Norbornylgruppen. Die Bandbreite dieser Liganden ermöglicht ein vielfältiges Einsatzgebiet dieser beschichteten Partikel. Auf dieser Basis können auch unterschiedliche (Bio)moleküle und Polymere an die Partikel gebunden werden. Die Partikel können so mit Biotin oder Streptavidin ausgerüstet bzw. gekoppelt werden. Somit kann eine in der Biologie fast zu Standard gewordene Streptavidin-Biotin Kopplung mit entsprechend funktionalisierten Substraten durchgeführt werden.

Die Kerne können auf nasschemischem Wege, bevorzugt durch den Stöber-Prozess oder durch ein Emulsions- bzw. Aerosol-Verfahren hergestellt werden.

Weiterhin können die Kerne aus oxidischen, organischen oder hybriden Materialien hergestellt werden. Bevorzugt werden die Kerne aus Siliciumdioxid, Polystyrol, Zirkonoxid, Zinnoxid, Titanoxid, Eisenoxid oder aus hybriden Materialien hergestellt. Diese, gegebenenfalls amorphen, Kerne weisen eine besondere Stabilität sowie eine einheitliche sphärische Form auf. Weiterhin ist hier eine enge Größenverteilung der Partikel gegeben.

Bevorzugt wird zur Beschichtung der Kerne mit einem anorganisch-dotierten Material ein nasschemischer Prozess, vorzugsweise ein Sol-Gel-Prozess, eingesetzt. Vorteile dieses Verfahrens sind die homogene Verteilung der Edukte und, als Folge davon, eine homogene Verteilung des Dotiermaterials. Weiterhin kann die Schalendicke gezielt eingestellt werden.

In einer alternativen Verfahrensvariante werden Metallsalze mit Säure und/oder Polyalkoholen versetzt und durch die gelatisierende Wirkung wird eine atomare Verteilung der Metallkationen hergestellt. Somit erfolgt eine gleichmäßige Dotierung des Materials. Die Ausgangsverbindung für die Schale kann beispielsweise mit Zitronensäure und Polyethylenglycol versetzt werden, wobei zunächst ein homogenes Netzwerk aus Metall-Chelatkomplexen entsteht. Die restlichen funktionellen Gruppen der Säure reagieren mit den OH-Gruppen des Diols zu einem Polyester. Dies führt zu einer guten statistischen Verteilung der Kationen in der Mischung und darauf folgend zum gleichmäßigen Beschichten von Kernkugeln mit dem Schalenmaterial.

Bevorzugt werden als Dotierstoffe für die Beschichtung Übergangsmetalle, Schwermetalle oder Seltenerd-Elemente eingesetzt. Beispielhaft zu nennen sind hier La, Ce, Pr, Sm, Eu, Gd, Tb, Dy, Y, Er, Yb bzw. Mn sowie deren Ionen. Es können auch Bi und B bzw. deren Ionen als Dotierstoffe eingesetzt werden.

Weiterhin werden Partikel mit einer lumineszierenden anorganischen Schale beschrieben, die nach den genannten Verfahren herstellbar sind.

Zur Beschichtung können auch Oxide oder unterschiedliche Salze in löslicher oder kolloidaler Form eingesetzt werden, wie z.B. Acetate, Stearate, Nitrate, Chloride oder Phosphate.

Bevorzugt sind diese Partikel zu maximal < 50 %, bezogen auf das Gesamtgewicht der Partikel, agglomeriert und/oder aggregiert. Somit wird eine feine Verteilung in Lösungsmedien ermöglicht.

Erfindungsgemäß werden die Partikel mit einer lumineszierenden anorganischen Schale als lumineszierende Marker für die biologische und medizinische Diagnostik, als optisch detektierbare Diffusionssonde, als Substrat für die heterogene Katalyse, zur Herstellung von Leuchtdioden, zur Herstellung von Sicherheitssystemen, als Markierung zur Erkennung von Plagiaten und/oder Originalen, als Auf/Ab-Konverter (Up/down-Konverter), z.B. für Solarsysteme, Komponente für die leuchtende Beschichtung, Komponente für die Pharmakotherapie (Drug-Delivery), Tinten verwendet.

Anhand der nachfolgenden Beispiele soll der erfindungsgemäße Gegenstand näher erläutert werden, ohne diesen auf die hier gezeigten speziellen Ausführungsformen einschränken zu wollen.

### Beispiel 1:

### Synthese von SiO₂-Partikelkernen

900 ml Ethanol und 45 ml wässrige Ammoniaklösung werden bei 21 °C vermischt. Dazu werden 45 g Tetraethoxysilan (TEOS) gegeben und gerührt. Innerhalb von 1 h trübt die Lösung ein. Die entstehenden Partikel werden zentrifugiert und zweimal mit Ethanol gewaschen. Der mittlere Durchmesser der Kerne beträgt 73 nm.

### Beispiel 2:

### Beschichtung von SiO₂-Kernen mit einer 10 nm dicken Zn₂SiO₄:Mn-Schale (5 mol-% Mangan-Dotierung)

31,2 g (142,0 mmol) Zinkacetat und 1,3 g (7,5 mmol) Manganacetat werden in einem Gemisch aus 837,6 g Ethanol und 133,0 g Wasser unter Zugabe von Salpetersäure (10 mol/l), 62,6 g Zitronensäure (298,0 mmol) und Polyethylenglycol (52 g/l) gelöst. 6,0 g der in Beispiel 1 beschriebenen SiO₂-Kerne werden zum Reaktionsgemisch gegeben. Der Ansatz wird bei Raumtemperatur 3 h gerührt. Die beschichteten Partikel werden zentrifugiert, schockgefroren und anschließend gefriergetrocknet.

Die Wärmebehandlung schließt eine Vortrocknung der Partikelpulver von 2 bis 3 h bei 115 °C und ein 15 minütiges Ausheizen der Probe bei 900 °C ein. Der Heizvorgang erfolgt mit einer Geschwindigkeit von 300 °C/h. Anschließend wird die Partikelprobe schnell auf Raumtemperatur abgekühlt. Das erhaltene Pulver (Partikeldurchmesser 75 nm) weist bei einer Anregungswellenlänge von 254 nm grüne Lumineszenz auf.

### Beispiel 3:

### Oberflächenfunktionalisierung mit einem Aminosilan

1 g von in Beispiel 2 beschriebenen Kern-Schale-Nanopartikel werden in 100,00 ml Ethanol redispergiert. Dazu werden unter Rühren 4,3 ml wässrige Ammoniaklösung und 178 µl (692 µmol) N-[3-(Trimethoxy-silyl)-propyl]-diethylentriamin gegeben. Danach wird die Reaktionsmischung 12 h bei Raumtemperatur gerührt. Anschließend werden Partikel abzentrifugiert und 3- bis 4-mal mit Ethanol gewaschen. Die Aminofunktionalisierung wird anhand von Zeta-PotentialMessung nachgewiesen (der isoelektrische Punkt liegt bei pH 8,6 bis 9,1; für unfunktionalisierte Partikel liegt der isoelektrische Punkt bei pH 2,8).

### Beispiel 4:

### Beschichtung von SiO₂-Kernen mit einer 10 nm dicken Calciumphosphat-Schale (4 mol-% Europium-Dotierung)

0,93 g (3,93 mmol) Calciumnitrat-Tetrahydrat und 29,4 mg (0,08 mmol) Europium-Oxid werden in einem Gemisch aus 279,2 g Ethanol und 44,3 g Wasser unter Zugabe von Salpetersäure (10 mol/l), 1,7 g (828,0 mmol) Zitronensäure und Polyethylenglycol (52 g/l) gelöst. 2,0 g der in Beispiel 1 beschriebenen SiO₂-Kerne werden zum Reaktionsgemisch gegeben. Der Ansatz wird bei Raumtemperatur 3 h gerührt. Die beschichteten Partikel werden zentrifugiert, schockgefroren und anschließend gefriergetrocknet.

Die Wärmebehandlung schließt eine Vortrocknung des Partikelpulvers für 1 h bei 100 °C und 15 min Ausheizen der Probe bei 800 °C ein. Der Heizvorgang erfolgt mit einer Geschwindigkeit bzw. Aufheizrate von 300 °C pro Stunde. Anschließend wird die Partikelprobe schnell auf Raumtemperatur abgekühlt. Das erhaltene Pulver (Partikeldurchmesser 80 nm) luminesziert bei einer Anregungswellenlänge von 254 nm rosafarben.

## Patentansprüche

1. Verfahren zur Beschichtung von Partikeln mit
einer mittleren Partikelgröße von 20 nm bis 20 µm mit einer lumineszierenden anorganischen Schale gemäß den folgenden Schritten:
(a) Synthese der Kerne,
(b) Beschichtung der Kerne mit einem anorganischen dotierten Material,
(c) Temperaturbehandlung der beschichteten Kerne, **dadurch gekennzeichnet, dass** als Schritt c) eine stufenweise Temperaturbehandlung der beschichteten Kerne durchgeführt wird, mit der Maßgabe, dass in mindestens einem ersten Schritt die beschichteten Kerne bei unter 0 °C vorbehandelt und dann in mindestens einem zweiten Schritt einer Wärmebehandlung zur Bildung einer kristallinen Schale unterzogen werden.

2. Verfahren nach Anspruch 1,
**dadurch gekennzeichnet, dass** beim ersten Schritt als Vorbehandlung ein Schockfrieren der beschichteten Kerne durchgeführt wird.

3. Verfahren nach Anspruch 2,
**dadurch gekennzeichnet, dass** die so vorbehandelten Kerne im Anschluss gefriergetrocknet werden.

4. Verfahren nach einem der Ansprüche 1 bis 3,
**dadurch gekennzeichnet, dass** die Wärmebehandlung zur Bildung der kristallinen Schale stufenweise durchgeführt wird.

5. Verfahren nach Anspruch 4,
**dadurch gekennzeichnet, dass** in mindestens einer ersten Stufe eine Wärmebehandlung bei 50 °C bis 300 °C, vorzugsweise bei 100 °C bis 120 °C, erfolgt, wobei die Wärmebehandlung unter mechanischer Umwälzung erfolgt.

6. Verfahren nach einem der Ansprüche 4 oder 5,
**dadurch gekennzeichnet, dass** in mindestens
einer zweiten Stufe eine Wärmebehandlung zur Bildung der kristallinen Schale bei einer Temperatur von 400 °C bis 1400 °C durchgeführt wird, wobei bevorzugt mit einer Aufheizrate von 50 °C bis 500 °C, besonders bevorzugt 300 °C bis 400 °C, pro Stunde gearbeitet wird und die für die Bildung der kristallinen Schale erforderliche Temperatur bevorzugt für 5 min bis 1,5 Stunden, besonders bevorzugt für 10 bis 30 Minuten, gehalten wird.

7. Verfahren nach mindestens einem der Ansprüche 1 bis 6,
**dadurch gekennzeichnet, dass** die Schichtdicke der kristallinen Schale auf einen Wert von 1 nm bis 100 nm eingestellt wird.

8. Verfahren nach mindestens einem der Ansprüche 1 bis 7,
**dadurch gekennzeichnet, dass** eine weitere Schale, die als Sperrschicht fungiert, aufgebracht wird.

9. Verfahren nach mindestens einem der Ansprüche 1 bis 8,
**dadurch gekennzeichnet, dass** eine Oberflächenfunktionalisierung, insbesondere durch die Kopplung von Liganden, durchgeführt wird, wobei die für die Oberflächen-Funktionalisierung eingesetzten Liganden vorzugsweise ausgewählt sind aus Carboxy-, Carbonat-, Amin-, Maleimid-, Imin-, Imid-, Amid-, Aldehyd-, Thiol-, Isocyanat, Isothiocyanat-, Acylazid-Hydroxyl-, N-hydroxysuccinimidester, Phosphat-, Phosphonsäure-, Sulfonsäure-, Sulfonsäurechlorid, Epoxy, CC-Doppelbindungen-haltige Einheiten, wie z.B. Methacryl- oder Norbornylgruppen.

10. Verfahren nach mindestens einem der Ansprüche 1 bis 9,
**dadurch gekennzeichnet, dass** die Kerne auf nasschemischem Wege bevorzugt durch den Stöberprozess oder durch ein Emulsions- bzw. Aerosol-Verfahren hergestellt werden, wobei die Kerne bevorzugt aus oxidischen, organischen oder hybriden Materialien, besonders bevorzugt aus Siliciumoxid, Polystyrol, Zirkonoxid, Zinnoxid, Titanoxid, Eisenoxid oder aus hybriden Materialien, hergestellt werden.

11. Verfahren nach mindestens einem der Ansprüche 1 bis 10,
**dadurch gekennzeichnet, dass** zur Beschichtung der Kerne mit einem anorganisch-dotierten Material ein nasschemischer Prozess, vorzugsweise ein Sol-Gel-Prozess, eingesetzt wird.

12. Verfahren nach Anspruch 11,
**dadurch gekennzeichnet, dass** Metallsalze mit Säure und/oder Polyalkoholen versetzt werden und durch die gelatinisierende Wirkung eine atomare Verteilung der Metallkationen hergestellt wird.

13. Verfahren nach mindestens einem der Ansprüche 1 bis 12,
**dadurch gekennzeichnet, dass** als Dotierstoffe für die Beschichtung Übergangsmetalle, Schwermetalle oder Seltenerd-Elemente eingesetzt werden.

## Claims

1. Method for coating particles with an average particle size of 20 nm to 20 µm with a luminescent inorganic shell according to the following steps:
(a) synthesis of the cores,
(b) coating of the cores with an inorganic doped material,
(c) temperature treatment of the coated cores,
**characterised in that** a step-wise temperature treatment of the coated cores is implemented as step c), with the proviso that the coated cores are pretreated at below 0°C in at least one first step and then are subjected to a heat treatment, in at least one second step, in order to form a crystalline shell.

2. Method according to claim 1,
**characterised in that** a quick-freezing of the coated cores is implemented as pretreatment during the first step,

3. Method according to claim 2,
**characterised in that** the thus pretreated cores are subsequently freeze-dried.

4. Method according to one of the claims 1 to 3,
**characterised in that** the heat treatment for forming the crystalline shell is implemented in steps.

5. Method according to claim 4,
**characterised in that** a heat treatment at 50°C to 300°C, preferably at 100° to 120°C, is effected in at least one first step, wherein the heat treatment is effected with mechanical circulation.

6. Method according to one of the claims 4 or 5,
**characterised in that**, in at least one second step, a heat treatment for forming the crystalline shell is implemented at a temperature of 400°C to 1,400°C, wherein the operation preferably takes place at a heating rate of 50°C to 500°C, more preferably 300°C to 400°C, per hour the temperature for the formation of the crystalline shell is preferably maintained for 5 min to 1.5 hours, more preferably for 10 to 30 minutes.

7. Method according to at least one of the claims 1 to 6,
**characterised in that** the layer thickness of the crystalline shell is adjusted to a value of 1 nm to 100 nm.

8. Method according to at least one of the claims 1 to 7,
**characterised in that** a further shell which acts as barrier layer is applied.

9. Method according to at least one of the claims 1 to 8,
**characterised in that** a surface functionalisation is implemented, particularly by the coupling of ligands, wherein the ligands used for the surface functionalisation are selected from carboxy-, carbonate-, amine-, maleimide-, imine-, imide-, amide-, aldehyde-, thiol-, isocyanate, isothiocyanate-, acylazide-hydroxyl-, N-hydroxysuccinimide ester, phosphate-, phosphonic acid-, sulphonic acid-, sulphochloride, epoxy, CC-double bond-containing units, such as e.g. methacryl- or norbornyl groups.

10. Method according to at least one of the claims 1 to 9,
**characterised in that** the cores are produced by a wet-chemical route, preferably by the Stober process or by an emulsion- or aerosol process, wherein the cores are preferably produced from oxidic, organic or hybrid materials, particularly from silicon oxide, polystyrene, zirconium oxide, tin oxide, titanium oxide, iron oxide or from hybrid materials.

11. Method according to at least one of the claims 1 to 10,
**characterised in that** a wet-chemical process, preferably a sol-gel process, is used for coating the cores with an inorganically-doped material.

12. Method according to claim 11,
**characterised in that** metallic salts are mixed with acid and/or polyalcohols and an atomic distribution of the metal cations is produced by the gelling effect.

13. Method according to at least one of the claims 1 to 12,
**characterised in that** transition metals, heavy metals or rare earth elements are used as doping materials for the coating.

## Revendications

1. Procédé de revêtement de particules ayant une granulométrie moyenne de 20 nm à 20 µm, comportant une coque inorganique luminescente, selon les étapes suivantes :
(a) synthèse des coeurs,
(b) revêtement des coeurs avec un matériau dopé inorganique,
(c) traitement thermique des coeurs revêtus,
**caractérisé en ce qu'**on met en oeuvre en tant qu'étape (c) un traitement thermique pas-à-pas des coeurs revêtus, à la condition que, en au moins une première étape, on soumette à un traitement thermique à moins de 0°C les coeurs revêtus, puis qu'on les soumette, dans au moins une deuxième étape, à un traitement thermique pour former une coque cristalline.

2. Procédé selon la revendication 1, **caractérisé en ce qu'**on met en oeuvre dans la première étape en tant que traitement préalable une congélation ultra-rapide des coeurs revêtus.

3. Procédé selon la revendication 2, **caractérisé en ce que** les coeurs ainsi soumis à un traitement préalable sont ensuite lyophilisés.

4. Procédé selon l'une des revendications 1 à 3, **caractérisé en ce que** le traitement thermique est, pour la formation de la coque cristalline, mis en oeuvre pas-à-pas.

5. Procédé selon la revendication 4, **caractérisé en ce qu'**on procède dans au moins une première étape à un traitement thermique à 50 à 300°C, de préférence à 100 à 120°C, le traitement thermique étant mis en oeuvre en présence d'une recirculation mécanique.

6. Procédé selon l'une des revendications 4 ou 5, **caractérisé en ce que**, dans une deuxième étape, on met en oeuvre un traitement thermique pour former la coque cristalline à une température de 400 à 1400°C, auquel cas on travaille de préférence avec une vitesse de montée en température de 50 à 500°C, d'une manière particulièrement préférée de 300 à 400°C par heure, et on maintient pendant de préférence 5 min à 1,5 heure, d'une manière particulièrement préférée pendant 10 à 30 minutes, la température nécessaire à la formation de la coque cristalline.

7. Procédé selon au moins l'une des revendications 1 à 6, **caractérisé en ce que** l'épaisseur de couche de la coque cristalline est ajustée à une valeur de 1 nm à 100 nm.

8. Procédé selon au moins l'une des revendications 1 à 7, **caractérisé en ce qu'**on applique une coque supplémentaire, qui joue le rôle d'une couche d'arrêt.

9. Procédé selon au moins l'une des revendications 1 à 8, **caractérisé en ce qu'**on procède à une fonctionnalisation en surface, en particulier par couplage de ligands, les ligands utilisés pour la fonctionnalisation en surface étant de préférence choisis parmi les ligands carboxy, carbonate, amine, maléimide, imine, imide, amide, aldéhyde, thiol, isocyanate, isothiocyanate, acylazide-hydroxyle, ester N-hydroxysuccinimidique, phosphate, acide phosphonique, acide sulfonique, chlorure de sulfonyle, époxy, unités contenant des doubles liaisons CC, comme par exemple les groupes méthacryle ou norbornyle.

10. Procédé selon au moins l'une des revendications 1 à 9, **caractérisé en ce que** les coeurs sont fabriqués par une chimie par voie humide, de préférence par le procédé Stöber, ou par un procédé en émulsion ou en aérosol, les coeurs étant fabriqués de préférence à partir de matériaux de type oxyde, organiques ou hybrides, d'une manière particulièrement préférée à partir d'oxyde de silicium, de polystyrène, d'oxyde de zirconium, d'oxyde d'étain, d'oxyde de titane, d'oxyde de fer, ou de matériaux hybrides.

11. Procédé selon au moins l'une des revendications 1 à 10, **caractérisé en ce qu'**on utilise pour le revêtement des coeurs avec un matériau à dopage inorganique un procédé de chimie par voie humide, de préférence un procédé sol-gel.

12. Procédé selon la revendication 11, **caractérisé en ce que** des sels métalliques sont additionnés d'un acide et/ou de polyalcools, et une répartition atomique des cations métalliques étant réalisée par l'effet de gélatinisation.

13. Procédé selon au moins l'une des revendications 1 à 12, **caractérisé en ce qu'**on utilise en tant que substances dopantes pour le revêtement des métaux de transition, des métaux lourds ou des éléments des terres rares.
